# FASCICULE DE BREVET EUROPEEN

(11) **EP 3 677 760 B1**
(45) Date de publication et mention de la délivrance du brevet: **01.03.2023**
(21) Numéro de dépôt: 19216997.7
(22) Date de dépôt: 17.12.2019
(51) Int. Cl.: F02C 7/32, F02C 7/36, F16H 57/04

(54) **DÉFLECTEUR POUR LE CARENAGE D'UN PIGNON DE TURBOMACHINE, BOITIER D'ENGRENAGES ET TURBOMACHINE ASSOCIÉS**
DEFLEKTOR FÜR DAS GEHÄUSE EINES TURBOMASCHINENRITZELS, ENTSPRECHENDES GETRIEBEGEHÄUSE UND ENTSPRECHENDE TURBOMASCHINE
DEFLECTOR FOR THE FAIRING OF A TURBINE ENGINE PINION, ASSOCIATED GEAR UNIT AND TURBINE ENGINE

(30) Priorité: 04.01.2019 FR 1900057
(43) Date de publication de la demande: 08.07.2020
(73) Titulaire: Safran Transmission Systems, 92700 Colombes (FR)
(72) Inventeur: GUILLEMONT, Maxence, Gérard, Claude, 77550 MOISSY CRAMAYEL (FR)
(74) Mandataire: Cabinet Camus Lebkiri

(56) Documents cités:
- EP-A1- 3 346 099
- EP-A2- 1 610 036
- US-A1- 2010 140 019
- US-A1- 2017 146 112

## Description

### DOMAINE DE L'INVENTION

L'invention se rapporte au domaine général des turbomachines.

L'invention concerne plus particulièrement un déflecteur utilisé pour le carénage d'un pignon de turbomachine, par exemple un pignon utilisé dans un boitier d'engrenages de la turbomachine. En outre, l'invention se rapporte à une turbomachine comportant un tel déflecteur.

### ARRIÈRE-PLAN TECHNOLOGIQUE DE L'INVENTION

Dans les turbomachines, une partie de la puissance générée est utilisée pour entraîner différents accessoires, nécessaires au fonctionnement de la turbomachine ou de l'aéronef, tels qu'un générateur électrique, une pompe de lubrification ou encore une pompe à carburant.

À cet effet, la turbomachine comporte généralement un boitier d'engrenage d'entrée (IGB : Inlet Gear Box), un arbre d'entraînement radial (RDS : Radial Drive Shaft), un boîtier d'engrenage de transfert (TGB : Transfer Gear Box) et un boitier d'engrenage d'accessoires (AGB : Accessory Gear Box) supportant les différents accessoires.

Lorsque l'arbre moteur est entraîné en rotation, il entraine mécaniquement les différents accessoires par l'intermédiaire de l'IGB, du RDS, du TGB puis de l'AGB. L'IGB et le TGB assurent un renvoi d'angle qui permet de passer d'un système de rotation longitudinal à un système de rotation transversal sur une même machine par des mécanismes d'engrenages.

Afin d'assurer la lubrification et le refroidissement des engrenages de l'IGB et de la TGB, il est connu d'utiliser des gicleurs pour projeter de l'huile froide en direction des pignons des mécanismes d'engrenages. Ainsi le brevet EP 1 610 036 décrit un déflecteur comportant un circuit d'injection d'huile à l'extérieur des dentures, cependant la lubrification est insuffisante.

En outre, afin d'éviter les problèmes de barbotage et de barattage, les pignons sont généralement carénés par un déflecteur en tôle qui assure la séparation du flux d'air généré par la rotation des pignons, des forces d'aspiration d'un dispositif de récupération d'huile.

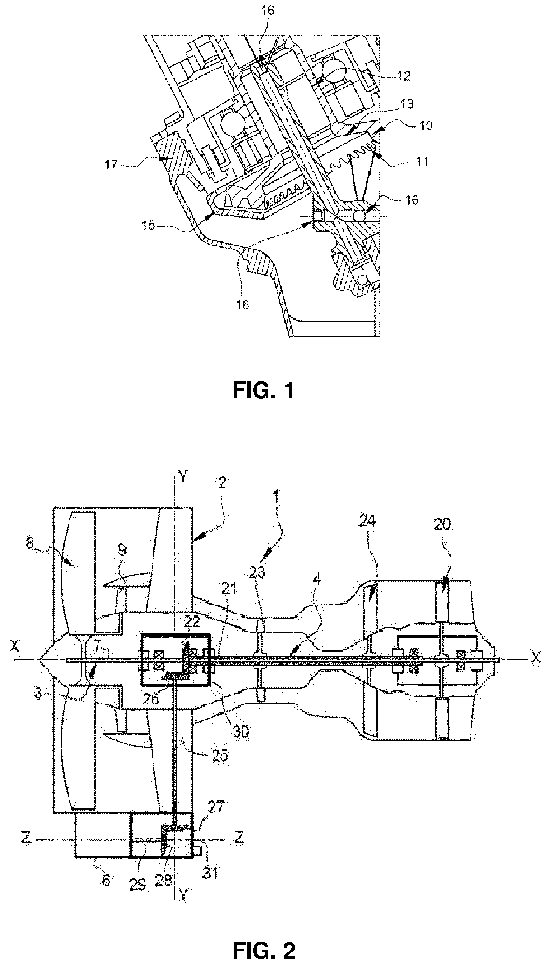

[Fig. 1] illustre une vue en coupe d'un exemple de mécanisme d'engrenages dans un boitier d'engrenages de turbomachine.

En référence à la figure 1, un pignon 10 conique est engrené avec un autre pignon conique (non représenté) pour former un renvoi d'angle. Le pignon 10 comporte une denture 11, un fût 12 ainsi qu'un voile 13 positionné entre la denture 11 et le fût 12.

Un déflecteur 15, fixé au carter 17 du boitier d'engrenages, carène une partie de la denture 11 du pignon 10. En outre, des gicleurs 16, également fixés au carter 17, projettent de l'huile froide en direction de la denture 11 ainsi qu'à l'intérieur du fût 12 du pignon 10.

Afin d'assurer correctement le carénage et la lubrification du pignon 10, le déflecteur 15 et les gicleurs 16 doivent être positionnés au plus près du pignon 10. En outre, les gicleurs 16 doivent être orientés selon une direction adaptée pour cibler la denture 11 et l'intérieur du fût 12 du pignon 10.

Cela entraine des difficultés lors du montage dans le boitier d'engrenages car le déflecteur et les gicleurs doivent être positionnés proches spatialement du pignon dans un espace réduit.

### RÉSUMÉ DE L'INVENTION

Dans ce contexte, l'invention vise à remédier à tout ou partie des inconvénients de l'état de la technique identifiés ci-dessus, notamment en proposant une solution permettant d'assurer le carénage et la lubrification d'un pignon de turbomachine dont le montage est simplifié.

Ainsi selon un premier aspect, l'invention concerne un déflecteur pour le carénage d'au moins un pignon de turbomachine, ledit au moins un pignon comportant une denture, un fût et un voile positionné entre la denture et le fût, le déflecteur s'étendant autour d'un axe et comportant une enveloppe dont la forme et les dimensions sont adaptées pour entourer au moins une partie de la denture du pignon, le déflecteur comportant un circuit d'injection d'huile comportant :
- une première portion ménagée sur une surface externe de l'enveloppe,
- au moins un premier trou d'injection ménagé dans l'enveloppe et communiquant avec la première portion du circuit d'injection d'huile, ledit au moins premier trou d'injection débouchant sur une surface interne de l'enveloppe de sorte à injecter de l'huile en direction du pignon,
- une seconde portion communiquant avec la première portion, ladite seconde portion comportant au moins un deuxième trou d'injection destiné à être en regard de l'intérieur du fût du pignon.

L'invention selon le premier aspect permet de résoudre les problèmes préalablement cités.

En effet, en plus du carénage du pignon, le déflecteur selon l'invention assure la lubrification et le refroidissement du pignon.

Ainsi, l'utilisation d'un tel déflecteur permet de réduire le nombre de pièces dans la turbomachine et donc la masse de la turbomachine tout en simplifiant les opérations de montage.

De plus, dans la mesure où le premier trou d'injection est directement ménagé dans l'enveloppe entourant la denture du pignon, la longueur du jet d'huile est plus courte. Cela permet de s'affranchir des exigences de ciblage imposées par l'utilisation des gicleurs selon l'art antérieur.

En outre, il est possible de ménager une pluralité de premiers trous d'injection communiquant avec le circuit d'injection d'huile de manière à assurer la lubrification et le refroidissement de la denture du pignon sur toute sa largeur.

Par ailleurs, en rapprochant le premier trou d'injection de la denture du pignon, l'huile peut atteindre la denture du pignon même lors du démarrage de la turbomachine où le régime de rotation de la turbomachine et donc la pression d'huile sont faibles. En effet, avec les gicleurs de l'art antérieur, il n'est pas possible lors du démarrage de la turbomachine de cibler correctement la denture du pignon car la pression d'huile n'est pas suffisante. Ainsi, le déflecteur selon l'invention permet d'éviter la dégradation prématurée du pignon.

Enfin, le déflecteur selon l'invention permet d'injecter, avec un débit optimisé, de l'huile en direction du pignon aussi bien à l'engrènement, pour former un film d'huile facilitant le contact avec un autre pignon, qu'au dégrènement, pour dissiper les calories apportées par la mécanique de contact tandis qu'avec un gicleur classique, l'injection d'huile peut se faire soit à l'engrènement soit au dégrènement.

De plus, grâce à la seconde portion du circuit d'injection du fluide, le déflecteur assure également la lubrification de l'intérieur du fût du pignon.

Le déflecteur selon le premier aspect de l'invention peut également présenter une ou plusieurs des caractéristiques ci-dessous, considérées individuellement ou selon toutes les combinaisons techniquement possibles.

Selon un mode de réalisation non limitatif, ledit au moins un premier trou d'injection est destiné à déboucher en regard de la denture du pignon.

Selon un mode de réalisation non-limitatif, ledit au moins un premier trou d'injection et ledit au moins un deuxième trou d'injection présentent un diamètre compris entre 0.5 et 5mm.

Selon un mode de réalisation non-limitatif, la première portion et la seconde portion du circuit d'injection d'huile forment une canalisation pourvue d'un coude au niveau d'une jonction de raccordement entre la première portion et la seconde portion.

Selon un mode de réalisation non-limitatif, la canalisation, formée par la première portion et la seconde portion du circuit d'injection d'huile, est raccordée à un circuit de lubrification relié à une pompe de lubrification.

Selon un mode de réalisation non-limitatif, l'enveloppe comporte une collerette de fixation présentant des orifices de fixation.

Selon un mode de réalisation non-limitatif, la collerette de fixation est festonnée.

Par ailleurs, selon un deuxième aspect, l'invention se rapporte à un boitier d'engrenages de turbomachine comportant au moins un pignon et un déflecteur selon le premier aspect, le déflecteur carénant ledit pignon.

Selon un mode de réalisation non-limitatif, le pignon est conique.

Selon un mode de réalisation non-limitatif, le pignon est cylindrique.

Par ailleurs, l'invention selon un troisième aspect se rapporte à une turbomachine comportant au moins un déflecteur selon le premier aspect de l'invention.

### BRÈVE DESCRIPTION DES FIGURES

D'autres caractéristiques et avantages de l'invention ressortiront à la lecture de la description qui suit, en référence aux figures annexées, qui illustrent :
- à la figure 1, une vue en coupe longitudinale d'un mécanisme d'engrenages selon l'art antérieur,
- à la figure 2, une vue en coupe longitudinale d'une turbomachine pouvant inclure un ou plusieurs déflecteurs selon l'invention,
- à la figure 3, une vue en perspective d'un déflecteur selon un premier mode de réalisation de l'invention,
- à la figure 4, une vue de dessus d'un pignon de la turbomachine caréné par le déflecteur illustré à la figure 3,
- à la figure 5, une vue en coupe longitudinale du pignon caréné par le déflecteur illustré à la figure 4,
- à la figure 6, une vue en perspective d'un déflecteur selon un deuxième mode de réalisation de l'invention,
- à la figure 7, une vue en coupe longitudinale d'un pignon de la turbomachine caréné par le déflecteur illustré à la figure 6.

### DESCRIPTION DÉTAILLÉE

[Fig. 2] représente de façon schématique une coupe longitudinale d'une turbomachine à double flux 1 dans laquelle au moins un déflecteur 100 selon l'invention peut être intégré.

La turbomachine 1 d'axe longitudinal X-X comporte un carter de soufflante 2, un corps basse-pression 3, un corps haute-pression 4, une chambre de combustion 5 et un boîtier d'entraînement d'accessoires 6.

Dans la suite de la description, les termes « amont » et « aval » sont utilisés en référence au sens d'écoulement normal du flux gazeux dans la turbomachine 1.

Le corps basse-pression 3 comporte un arbre basse-pression 7 centré sur l'axe longitudinal X-X de la turbomachine 1, une soufflante 8 montée sur l'extrémité amont de l'arbre basse-pression 7, un compresseur basse-pression 9 fixé sur la soufflante 8, en aval de celle-ci, et une turbine basse-pression 20 montée sur l'extrémité aval de l'arbre basse-pression 7.

Le corps haute-pression 4 comporte un arbre haute-pression 21 disposé concentriquement autour de l'arbre basse-pression 7, un pignon de sortie 22 monté sur l'extrémité amont de l'arbre haute-pression 21, un compresseur haute-pression 23 monté sur l'arbre haute-pression 21, en aval du pignon de sortie 22, et une turbine haute-pression 24 montée sur l'extrémité aval de l'arbre haute-pression 21.

Les compresseurs 9, 23 et turbines 20, 24 des corps basse pression 3 et haute pression 4 de la turbomachine 1 illustrés à la figure 2 ont été représentés avec un unique étage d'aubes afin de faciliter leur compréhension.

Le boîtier d'entraînement d'accessoires (AGB) 6, fixé sous le carter de la soufflante 2 dans le mode de réalisation de la figure 2, est entraîné en rotation par l'arbre haute-pression 21 via un arbre d'entrainement radial 25 et un arbre d'entrée 29 relié au train d'engrenage de l'AGB 6. En particulier, l'arbre d'entrainement radial 25 présente un pignon d'entrée 26 monté sur son extrémité radialement externe, et un pignon de sortie 27 monté sur son extrémité radialement interne, vis-à-vis de l'axe X-X longitudinal de la turbomachine 1. Le pignon de sortie 27 de l'arbre d'entrainement radial 25 est engrené avec un pignon d'entrée 28 monté sur une extrémité aval de l'arbre d'entrée 29. On note que dans d'autres modes de réalisation non représentés, l'AGB est positionné dans la nacelle ou encore dans la zone dite « core » de la turbomachine.

Le pignon de sortie 22 de l'arbre haute-pression 21 est engrené avec le pignon d'entrée 26 de l'arbre d'entrainement radial 25 en formant un renvoi d'angle, et sont logés dans un boitier d'engrenage d'entrée (IGB) 30. Grâce à l'engrènement du pignon de sortie 22 de l'arbre haute-pression 21 avec le pignon d'entrée 26 de l'arbre d'entrainement radial 25, la rotation de l'arbre haute-pression 21 autour de l'axe X-X entraine une rotation de l'arbre d'entrainement radial 25 autour de son axe de rotation Y-Y.

Par ailleurs, le pignon de sortie 27 de l'arbre d'entrainement radial 25 est engrené avec le pignon d'entrée 28 de l'arbre d'entrée 29 du boitier d'entrainement d'accessoires 6 en formant un renvoi d'angle, et sont logés dans un boitier d'engrenage de transfert (TGB) 31. Grâce à l'engrènement du pignon de sortie 27 de l'arbre d'entrainement radial 25 avec le pignon d'entrée 28 de l'arbre d'entrée 29, une rotation de l'arbre d'entrainement radial 25 autour de l'axe Y-Y provoque une rotation de l'arbre d'entrée 29 autour de son axe de rotation Z-Z.

Afin d'assurer correctement la lubrification et le refroidissement des pignons 22, 26, 27 et 28 de l'IGB et du TGB décrits précédemment tout en évitant les phénomènes de barattage et barbotage, un déflecteur 100 selon l'invention est utilisé pour caréner au moins un des pignons 22, 26, 27, 28. Dans un mode de réalisation préféré, tous les pignons 22, 26, 27, 28 sont carénés par le déflecteur 100 selon l'invention.

Dans la suite de la description, le déflecteur 100 est décrit en référence à un pignon 10 qui peut aussi bien être le pignon de sortie 22 de l'arbre haute-pression 21, le pignon d'entrée 26 de l'arbre d'entrainement radial 25, le pignon de sortie 27 de l'arbre d'entrainement radial 25 ou encore le pignon d'entrée 28 de l'arbre d'entrée 29.

Dans la suite de la description, les termes « axialement » et « radialement » sont utilisés pour désigner, respectivement, un axe parallèle et un axe perpendiculaire à l'axe de rotation A du pignon 10. En outre, on désigne par « intérieur » et « extérieur » une disposition, respectivement, proche et éloignée de l'axe de rotation A du pignon 10.

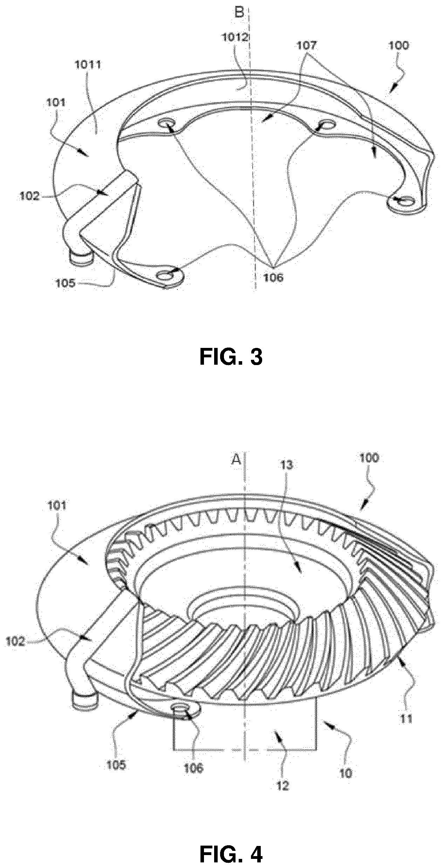

[Fig. 3] est une vue en perspective du déflecteur 100 selon un premier mode de réalisation de l'invention.

[Fig. 4] est une vue de dessus du pignon 10 caréné par le déflecteur 100 illustré à la figure 3.

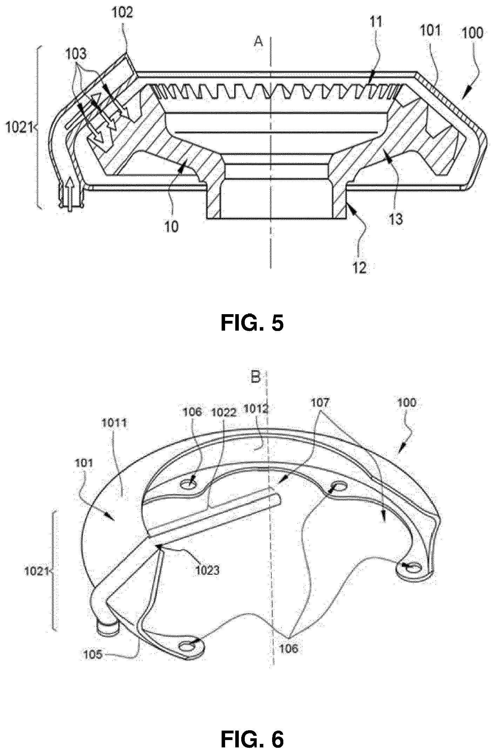

[Fig. 5], est une vue en coupe longitudinale du pignon 10 caréné par le déflecteur 100 illustré à la figure 4.

Le déflecteur 100 carène un pignon 10 conique d'axe de rotation A. Naturellement, le pignon 10 peut présenter une autre forme, par un exemple il peut s'agir d'un pignon cylindrique. En outre, le pignon 10 présente une denture 11, un fût 12 et un voile 13 entre la denture 11 et le fût 12. Dans le mode de réalisation illustré aux figures 4, 5 et 7, la denture 11 est hélicoïdale, le fût 12 est un arbre creux et le voile 13 est tronconique.

Par ailleurs, le déflecteur 100 comporte une enveloppe 101 s'étendant autour d'un axe B et présentant une forme et des dimensions adaptées pour entourer une partie de la denture 11 du pignon 10. En effet, l'enveloppe 101 entoure partiellement la denture 11 du pignon 10 de manière à ne pas entraver la transmission de puissance entre le pignon 10 et un autre pignon engrené avec ledit pignon 10. À cet effet, l'enveloppe 101 présente la forme d'un demi-anneau définissant un logement interne adapté pour recevoir une partie de la denture 11. En outre, l'enveloppe 101 présente une surface interne 1012, en regard de la denture 11 du pignon 10 et une surface externe 1011.

Le déflecteur 100 comporte également un circuit d'injection d'huile 102 qui assure l'acheminement d'huile en direction du pignon 10.

En particulier, afin d'assurer la lubrification et le refroidissement de la denture 11 du pignon, le circuit d'injection d'huile 102 comporte :
- une première portion 1021,
- des premiers trous d'injection 103.

La première portion 1021 du circuit d'injection d'huile 102 est ménagée sur la surface externe 1011 de l'enveloppe 101. Avantageusement, la première portion 1021 et l'enveloppe 101 partagent une paroi commune.

Les premiers trous d'injection 103, trois dans le mode de réalisation de la figure 5, sont ménagés dans l'enveloppe 101. En outre, les premiers trous d'injection 103 communiquent avec la première portion 1021 du circuit d'injection d'huile 102 et débouchent sur la surface interne 1012 de l'enveloppe 101 de manière à injecter de l'huile en direction du pignon 10. Avantageusement, les premiers trous d'injection 103 sont orientés selon une direction adaptée pour cibler la denture 11 du pignon 10 et présentent par exemple un diamètre compris entre 0,5 et 5mm.

Naturellement, le circuit d'injection d'huile 102 peut comporter moins de trois premiers trous d'injection 103. Toutefois, dans un mode de réalisation préféré, la première portion 1021 du circuit d'injection d'huile 102 comporte une pluralité de premiers trous d'injection 103 de manière à pouvoir injecter de l'huile froide sur toute la largeur de la denture 11.

Par ailleurs, afin d'assurer la fixation du déflecteur 100 sur un carter de la turbomachine (non représenté), l'enveloppe 101 comporte une collerette de fixation 105 qui s'étend radialement vers l'intérieur, en direction du fût 12 ou du voile 13 du pignon 10. La collerette de fixation 105 comporte des orifices de fixation 106 adaptés pour recevoir des moyens de fixation, par exemple des boulons, qui assurent la solidarisation du déflecteur 100 sur le carter de la turbomachine 1.

Avantageusement, la collerette de fixation 105 est festonnée, de sorte que deux zones successives percées par un orifice de fixation 106 sont espacés par des portions vides 107, rendant le déflecteur 100 plus léger.

[Fig. 6] est une vue en perspective du déflecteur 100 selon un deuxième mode de réalisation de l'invention,

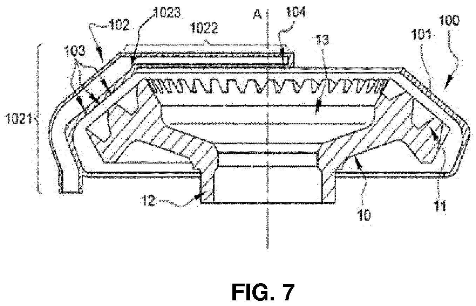

[Fig. 7] est une vue de coupe longitudinale du pignon 10 caréné par le déflecteur 100 illustré à la figure 6.

Le déflecteur 100 selon le deuxième mode de réalisation présente les mêmes caractéristiques que le déflecteur selon le premier mode de réalisation, à la différence que le circuit d'injection d'huile 102 comporte, en plus de la première portion 1021, une seconde portion 1022. Avantageusement, la première portion 1021 et la seconde portion 1022 du circuit d'injection d'huile 102 forment une canalisation raccordée à un circuit de lubrification lui-même raccordé à une pompe de lubrification (non illustrés).

La seconde portion 1022 du circuit d'injection d'huile 102 est en porte-à-faux depuis la première portion 1021 et s'étend radialement vers l'intérieur de sorte qu'une partie de la seconde portion 102 soit en regard de l'intérieur du fût 12 du pignon. Ainsi, la canalisation formée par la première portion 1021 et la seconde portion 1022 du circuit d'injection d'huile 102 est pourvue d'un coude au niveau d'une jonction de raccordement 1023 entre la première portion 1021et la seconde portion 1022

Afin d'assurer la projection d'huile vers l'intérieur du fût 12 du pignon 10, au moins un deuxième trou d'injection 104 est ménagé dans la seconde portion 1022. Le deuxième trou d'injection 104 est orienté en direction de l'intérieur du fût 12 du pignon 10. Naturellement, une pluralité de deuxièmes trous d'injection 104 peuvent être ménagés dans la seconde portion 1022 du circuit d'injection d'huile 102. En outre, le(s) deuxième(s) trou(s) d'injection 104 présentent par exemple un diamètre compris entre 0,5 et 5mm.

Par ailleurs, avantageusement, le déflecteur 100 est réalisé en alliage métallique, par exemple un alliage aluminium, un alliage d'acier, un alliage de type inconel^{®} ou encore un alliage de titane.

En outre, le déflecteur 100 selon l'invention peut être fabriqué par une méthode additive qui permet de dimensionner le déflecteur 100 de sorte qu'il épouse la forme du pignon 10. Dans une variante de réalisation, le déflecteur 100 est fabriqué par une méthode d'assemblage par mécano-soudure.

## Revendications

1. Déflecteur (100) pour le carénage d'au moins un pignon (10) de turbomachine, ledit au moins un pignon (101) comportant une denture (11), un fût (12) et un voile (13) positionné entre la denture (11) et le fût (12), le déflecteur (100) s'étendant autour d'un axe (B) et comportant une enveloppe (101) dont la forme et les dimensions sont adaptées pour entourer au moins une partie de la denture (11) du pignon (10), le déflecteur (100) comportant un circuit d'injection d'huile (102) comportant :
- une première portion (1021) ménagée sur une surface externe (1011) de l'enveloppe (101),
- au moins un premier trou d'injection (103) ménagé dans l'enveloppe (101) et communiquant avec la première portion (1021) du circuit d'injection d'huile (102), ledit au moins premier trou d'injection (103) débouchant sur une surface interne (1012) de l'enveloppe (101) de sorte à injecter de l'huile en direction du pignon (10),
le circuit d'injection d'huile (102) étant **caractérisé en ce qu'**il comporte :
- une seconde portion (1022) communiquant avec la première portion (1021), ladite seconde portion (1022) comportant au moins un deuxième trou d'injection (104) destiné à être en regard de l'intérieur du fût (12) du pignon (10).

2. Déflecteur (100) selon la revendication précédente, **caractérisé en ce que** ledit au moins un premier trou d'injection (103) est destiné à déboucher en regard de la denture (11) du pignon (10).

3. Déflecteur (100) selon l'une quelconque des revendications précédentes, **caractérisé en ce que** ledit au moins un premier trou d'injection (103) et ledit au moins un deuxième trou d'injection (104) présentent un diamètre compris dans l'intervalle [0,5 5 mm].

4. Déflecteur (100) selon l'une quelconque des revendications précédentes, **caractérisé en ce que** la première portion (1021) et la seconde portion (1022) du circuit d'injection d'huile (102) forment une canalisation pourvue d'un coude au niveau d'une jonction de raccordement (1023) entre la première portion (1021) et la seconde portion (1022)

5. Déflecteur (100) selon l'une quelconque des revendications précédentes, **caractérisé en ce que** l'enveloppe (101) comporte une collerette de fixation (105) présentant des orifices de fixation (106).

6. Déflecteur (100) selon l'une quelconque des revendications précédentes, **caractérisé en ce que** la collerette de fixation (105) est festonnée.

7. Boitier d'engrenages de turbomachine comportant au moins un pignon (10), **caractérisé en ce qu'**il comporte un déflecteur (100) selon l'une quelconque des revendications précédentes, ledit déflecteur (100) carénant le pignon (10).

8. Boitier d'engrenages selon la revendication précédente, **caractérisé en ce que** le pignon (10) est conique.

9. Turbomachine **caractérisée en ce qu'**elle comporte au moins un déflecteur (100) selon l'une des revendications 1 à 8.

## Patentansprüche

1. Deflektor (100) für die Verkleidung von mindestens einem Ritzel (10) einer Turbomaschine, wobei das mindestens eine Ritzel (101) eine Verzahnung (11), einen Schaft (12) und einen zwischen der Verzahnung (11) und dem Schaft (12) positionierten Steg (13) aufweist, sich der Deflektor (100) um eine Achse (B) erstreckt und ein Gehäuse (101) umfasst, dessen Form und Abmessungen so angepasst sind, dass es mindestens einen Teil der Verzahnung (11) des Ritzels (10) umschließt, und der Deflektor (100) ein Öleinspritzsystem (102) umfasst mit:
- einem ersten Abschnitt (1021), angeordnet auf einer Außenfläche (1011) des Gehäuses (101),
- mindestens einer Einspritzbohrung (103), die im Gehäuse (101) angebracht ist und mit dem ersten Abschnitt (1021) des Öleinspritzsystems (102) kommuniziert, wobei mindestens die erste Einspritzbohrung (103) zu einer Innenfläche (1012) des Gehäuses (101) führt, sodass Öl in Richtung des Ritzels (10) eingespritzt wird,
dem Öleinspritzsystem (102), durch folgende Bestandteile gekennzeichnet:
- einem zweiten Abschnitt (1022), der mit dem ersten Abschnitt (1021) kommuniziert, wobei der zweite Abschnitt (1022) mindestens eine zweite Einspritzbohrung (104) aufweist, die mit dem Inneren des Schafts (12) des Ritzels (10) bündig ist.

2. Deflektor (100) nach vorstehendem Anspruch, **dadurch gekennzeichnet, dass** mindestens eine erste Einspritzbohrung (103) so angeordnet ist, dass sie mit der Verzahnung (11) des Ritzels (10) bündig ist.

3. Deflektor (100) nach einem der vorstehenden Ansprüche, **dadurch gekennzeichnet, dass** die mindestens erste Einspritzbohrung (103) und die mindestens zweite Einspritzbohrung (104) einen Durchmesser innerhalb der Spanne [0,5 - 5 mm] aufweisen.

4. Deflektor (100) nach einem der vorstehenden Ansprüche, **dadurch gekennzeichnet, dass** der erste Abschnitt (1021) und der zweite Abschnitt (1022) des Öleinspritzsystems (102) eine Rohrleitung mit Krümmung auf Höhe einer Anschlussklemme (1023) zwischen dem ersten Abschnitt (1021) und dem zweiten Abschnitt (1022) bilden.

5. Deflektor (100) nach einem der vorstehenden Ansprüche, **dadurch gekennzeichnet, dass** das Gehäuse (101) einen Befestigungsflansch (105) mit Befestigungsbohrungen (106) aufweist.

6. Deflektor (100) nach einem der vorstehenden Ansprüche, **dadurch gekennzeichnet, dass** der Befestigungsflansch (105) festoniert ist.

7. Turbomaschinen-Zahnradgehäuse, das mindestens ein Ritzel (10) umfasst, **dadurch gekennzeichnet, dass** es nach einem der vorstehenden Ansprüche einen Deflektor (100) aufweist, wobei dieser Deflektor (100) das Ritzel (10) verkleidet.

8. Zahnradgehäuse nach vorstehendem Anspruch, **dadurch gekennzeichnet, dass** das Ritzel (10) konisch ist.

9. Turbomaschine, **dadurch gekennzeichnet, dass** sie mindestens einen Deflektor (100) nach einem der Ansprüche 1 bis 8 aufweist.

## Claims

1. Deflector (100) for the fairing of at least one turbomachine pinion (10), said at least one pinion (101) comprising a teething (11), a barrel (12) and a wall (13) positioned between the teething (11) and the barrel (12), the deflector (100) extending around an axis (B) and comprising an envelope (101) of which the shape and the dimensions are suited to surrounding at least one part of the teething (11) of the pinion (10), the deflector (100) comprising an oil injection circuit (102) comprising:
- a first portion (1021) provided on an outer surface (1011) of the envelope (101),
- at least one first injection hole (103) provided in the envelope (101) and communicating with the first portion (1021) of the oil injection circuit (102), said at least one first injection hole (103) emerging on an inner surface (1012) of the envelope (101) so as to inject oil in the direction of the pinion (10),
the oil injection circuit (102) **characterised in that** it comprises:
- a second portion (1022) communicating with the first portion (1021), said second portion (1022) comprising at least one second injection hole (104) intended to be facing the inside of the barrel (12) of the pinion (10).

2. Deflector (100) according to the preceding claim, **characterised in that** said at least one first injection hole (103) is intended to emerge facing the teething (11) of the pinion (10).

3. Deflector (100) according to any of the preceding claims, **characterised in that** said at least one first injection hole (103) and said at least one second injection hole (104) have a diameter comprised in the interval [0.5; 5 mm].

4. Deflector (100) according to any of the preceding claims, **characterised in that** the first portion (1021) and the second portion (1022) of the oil injection circuit (102) form a pipe provided with a bend at the level of a connecting junction (1023) between the first portion (1021) and the second portion (1022).

5. Deflector (100) according to any of the preceding claims, **characterised in that** the envelope (101) comprises a fastening flange (105) having fastening orifices (106).

6. Deflector (100) according to any of the preceding claims, **characterised in that** the fastening flange (105) is festooned.

7. Turbomachine gear box comprising at least one pinion (10), **characterised in that** it comprises a deflector (100) according to any of the preceding claims, said deflector (100) fairing the pinion (10).

8. Gear box according to the preceding claim, **characterised in that** the pinion (10) is conical.

9. Turbomachine **characterised in that** it comprises at least one deflector (100) according to one of claims 1 to 8.
